(19) Europäisches Patentamt

European Patent Office

Office européen des brevets

(11) EP 0 524 035 B1

## (12) FASCICULE DE BREVET EUROPEEN

(45) Date de publication et mention
de la délivrance du brevet:
**24.01.1996 Bulletin 1996/04**

(51) Int. Cl.⁶: **B01J 23/22**, B01D 53/48,
C01B 17/04

(21) Numéro de dépôt: **92401597.7**

(22) Date de dépôt: **10.06.1992**

(54) **Catalyseur et procédé de traitement de gaz contenant des composés soufrés**

Katalysator und Verfahren zur Behandlung von Schwefelkomponenten enthaltenden Gasen

Catalyst and process for sulfur compounds containing gases

(84) Etats contractants désignés:
**BE DE DK ES FR GB IT NL**

(30) Priorité: **17.06.1991 SU 4941760**

(43) Date de publication de la demande:
**20.01.1993 Bulletin 1993/03**

(73) Titulaires:
- **INSTITUT DE CATALYSE DU DEPARTEMENT SIBERIEN DE L'ACADEMIE DES SCIENCES DE RUSSIE Novossibirsk, 630090 (SU)**
- **VNIIGAZ Razvilka 142717 (SU)**

(72) Inventeurs:
- **Bouyanov, Roman A. 630090 Novossibirsk (SU)**

- **Tsyboulesky, Albert M. 113208 Moscou (SU)**
- **Zolotovsky, Boris P. 630090 Novossibirsk (SU)**
- **Klevtsov, Dimitri P. 630090 Novossibirsk (SU)**
- **Mourine, Vladimir L. 117296 Moscou (SU)**

(74) Mandataire: **Dubruc, Philippe F-92408 Courbevoie Cédex (FR)**

(56) Documents cités:
EP-A- 0 397 637    DE-A- 2 614 307
FR-A- 2 223 072    US-A- 4 550 098
US-A- 5 077 260    US-A- 5 094 992

## Description

Catalyseur, notamment pour le traitement de gaz industriels contenant des composés soufrés, comprenant un support et une phase supportée formée en particulier d'une solution solide de composition moyenne $A_4V_2O_9$, dans laquelle A est un élément métallique stabilisant le vanadium dans sa valence 5.

Procédé de préparation dudit catalyseur consistant essentiellement à imprégner le support par une solution d'un sel soluble de l'élément métallique A et d'un sel de vanadyle.

Procédé de traitement de gaz industriels contenant des composés soufrés, notamment de l'hydrogène sulfuré et de l'anhydride sulfureux, en vue d'éliminer lesdits composés soufrés par la réaction de Claus, en particulier en présence d'oxygène, mettant en oeuvre ledit catalyseur.

La présente invention concerne un nouveau catalyseur, notamment pour le traitement de gaz contenant des composés soufrés, et son procédé de préparation.

Elle concerne également un procédé de traitement de gaz, en particulier d'effluents gazeux industriels, contenant des composés soufrés, en vue d'éliminer lesdits composés soufrés, notamment par mise en oeuvre de la réaction de Claus permettant la récupération du soufre, en présence dudit catalyseur et, en particulier, d'oxygène.

Dans le procédé Claus classique, auquel n'est pas limitée l'invention, la récupération du soufre à partir de gaz renfermant de l'hydrogène sulfuré comporte deux étapes.

Dans une première étape, on brûle l'hydrogène sulfuré en présence d'une quantité d'air réglée pour transformer une partie du gaz en anhydride sulfureux ; puis, dans une seconde étape, on fait passer le mélange gazeux obtenu dans des réacteurs en série renfermant un catalyseur sur lequel a lieu la réaction de Claus :

$$2H_2S + SO_2 \text{-----> } 3/nS_n + 2H_2O$$

De nombreux catalyseurs sont utilisés pour ce type de réaction.

Ainsi, il est connu depuis très longtemps d'employer un catalyseur à base d'alumine ; ceci est notamment décrit dans le brevet français FR 1570161.

L'utilisation d'un mélange d'oxyde de titane et d'alumine a également été décrite (US-A-4141962).

Il a déjà été préconisé, pour ce type de réaction, l'emploi de catalyseurs qui, outre l'alumine, contiennent de l'oxyde de vanadium.

Mais un des inconvénients de ces catalyseurs réside notamment dans leur certaine instabilité par rapport à l'oxygène : ainsi, lorsque l'effluent gazeux à traiter contient de petites quantités d'oxygène, ces catalyseurs peuvent se désactiver relativement rapidement, par exemple du fait de la sulfatation de leur surface ; leur activité catalytique peut alors baisser de manière irréversible.

Il peut être aussi utilisé pour ce type de réaction un catalyseur contenant de l'oxyde de titane appliqué sur de la silice ou un catalyseur à base d'oxyde de titane comprenant, à titre d'additifs, des sulfates de métaux alcalino-terreux (US-A-4485189). Mais ces catalyseurs présentent également une activité moindre lors du traitement de gaz contenant de l'oxygène.

Or, il est important que le catalyseur conserve une activité satisfaisante en présence d'oxygène car les gaz industriels à traiter en contiennent souvent de petites quantités.

Le but de l'invention est donc de fournir un catalyseur ne présentant pas les inconvénients sus-mentionnés.

Ainsi, l'un des objets de l'invention est un nouveau catalyseur, notamment pour le traitement de gaz (gaz industriels par exemple) contenant des composés soufrés, présentant en particulier une activité élevée lors de la réaction de Claus et conservant sensiblement une telle activité lors de la réaction de Claus en présence d'oxygène, notamment pour des faibles temps de contact.

Un autre objet de l'invention consiste en un procédé de préparation du catalyseur selon l'invention.

L'utilisation d'un tel catalyseur pour traiter des gaz contenant des composés soufrés par mise en oeuvre de la réaction de Claus, notamment en présence d'oxygène, et un procédé de traitement des gaz contenant des composés soufrés, en particulier par la réaction de Claus, notamment en présence d'oxygène, constituent d'autres objets de la présente invention.

D'autres caractéristiques et avantages de l'invention seront mieux compris à la lecture de la description et des exemples concrets mais non limitatifs qui vont suivre.

Le catalyseur selon l'invention comprend un support et une phase supportée formée d'une solution solide de composition moyenne :

$$A_{4\pm y} V_{2\pm x} O_9$$

dans laquelle :

.    $0 \leqq x \leqq 0,2$ et $0 \leqq y \leqq 0,5$, x et y étant tels que l'électroneutralité de $A_{4\pm y} V_{2\pm x} O_9$ est assurée, et

EP 0 524 035 B1

. A est un élément métallique permettant de stabiliser le vanadium dans sa valence 5.

On entend par électroneutralité le fait que la somme des charges positives des cations de l'élément A et du vanadium est égale à la somme des charges négatives de l'oxygène.

Dans le cadre de l'invention, A est un élément métallique de préférence choisi dans le groupe formé par le calcium, le magnésium et le zinc ; A est avantageusement le magnésium.

De préférence, le catalyseur selon l'invention est sensiblement exempt d'oxyde de l'élément A, par exemple d'oxyde de magnésium, et de pentoxyde de vanadium, dont la présence diminuerait l'activité du catalyseur notamment lors de la réaction Claus en présence d'oxygène.

Ainsi, si y est supérieur à 0,5 ou/et x supérieur à 0,2, alors on constate l'apparition de l'oxyde de l'élément A libre, par exemple de l'oxyde de magnésium libre, le dépôt de sulfates sur la surface du catalyseur et la baisse de son activité ou/et l'apparition de pentoxyde de vanadyle libre qui diminue les propriétés du catalyseur.

De manière préférée, la phase supportée, catalytiquement active, est une .colution solide de composition moyenne $A_4V_2O_9$, et, de manière encore plus préférée, $Mg_4V_2O_9$.

En général, la quantité de phase supportée (formée d'une solution solide de composition moyenne $A_{4\pm y}V_{2\pm x}O_9$) est de préférence comprise entre 2 et 15 % en poids par rapport au catalyseur et la quantité de support est de préférence comprise entre 85 et 98 % en poids par rapport au catalyseur.

Le catalyseur selon l'invention présente habituellement une surface spécifique BET comprise entre 5 et 250 $m^2/g$ et un volume poreux total compris entre 0,15 et 0,80 $cm^3/g$.

Le support contenu dans le catalyseur selon l'invention est généralement à base d'au moins un oxyde, notamment choisi dans le groupe formé par l'oxyde d'aluminium, l'oxyde de titane, l'oxyde de zirconium, l'oxyde de cérium, la silice. De préférence, ledit support est à base d'oxyde de titane, d'oxyde de zirconium ou de silice.

L'oxyde de titane constitue le support préféré dans le cadre de la présente invention, notamment du fait des meilleures performances, en général, du catalyseur que l'on obtient.

Le support peut contenir au moins un additif, notamment un additif pour améliorer les propriétés mécaniques du catalyseur final. A titre d'additifs, on peut notamment citer l'oxyde d'aluminium, l'hydroxyde d'aluminium, le sulfate d'aluminium, la silice, les alumino-silicates (notamment de formule $Al_2O_3.6SiO_2$ ou $6Al_2O_3.SiO_2$), les argiles et les sulfates de métaux alcalino-terreux tels que les sulfates de barium, de calcium, de magnésium ou de strontium.

Ainsi, le support contenu dans le catalyseur selon l'invention peut comprendre 10 à 100 %, par exemple 10 à 99,5 %, en poids d'au moins un oxyde choisi dans le groupe formé par l'oxyde d'aluminium, l'oxyde de titane, l'oxyde de zirconium, l'oxyde de cérium, la silice, et 0 à 90 %, par exemple 0,5 à 90 %, en poids d'au moins un additif choisi dans le groupe formé par l'oxyde d'aluminium, l'hydroxyde d'aluminium, le sulfate d'aluminium, la silice, les silico-aluminates, les argiles, les sulfates de métaux alcalino-terreux.

Selon un mode préféré de réalisation de l'invention, ledit additif est l'oxyde d'aluminium.

Le support peut alors par exemple comprendre 70 à 90 % en poids d'oxyde de titane et 10 à 30 % en poids d'oxyde d'aluminium.

Selon un autre mode préféré de réalisation de l'invention, ledit additif est un sulfate de métal alcalino-terreux, et, plus particulièrement, le sulfate de calcium.

Le support peut alors par exemple comprendre 80 à 99 %; de préférence 80 à 90 %, en poids d'oxyde de titane et 1 à 20 %, de préférence 10 à 20 %, en poids de sulfate de métal alcalino-terreux.

Le support utilisé dans le cadre de l'invention présente habituellement une surface spécifique BET comprise entre 5 et 300 $m^2/g$ et un volume poreux total compris entre 0,15 et 0,80 $cm^3/g$.

Le catalyseur conforme à l'invention peut être préparé selon tout procédé connu approprié pour obtenir un produit sur support.

Ce catalyseur est par exemple préparé par un procédé consistant essentiellement à imprégner le support par une solution d'un sel de l'élément métallique A et d'un sel de vanadyle, ce procédé constituant un autre objet de l'invention.

Les sels utilisés sont habituellement thermiquement décomposables.

Ce procédé selon l'invention comprend, de manière préférée, les étapes suivantes :

1) on imprègne le support par une solution d'un sel soluble de l'élément métallique A et d'un sel soluble de vanadyle,
2) on sèche le support imprégné,
3) éventuellement, on calcine le support séché.

Il est possible de répéter l'ensemble de ces étapes 1), 2) et, éventuellement, 3) avec le même support après l'avoir séché et éventuellement calciné.

La solution d'imprégnation peut être également constituée soit d'un mélange d'une solution d'un sel soluble de l'élément métallique A et d'une solution d'un sel soluble de vanadyle, soit d'une solution d'un des deux sels dans laquelle a été introduit l'autre sel.

3

La concentration en sels de la solution d'imprégnation est choisie en fonction de la quantité de solution solide à déposer sur le support.

La quantité de solution d'imprégnation absorbée dépend de la capacité d'absorption du support utilisé.

Le sel de l'élément métallique A est le plus souvent un nitrate, un oxalate, un acétate ou un ammonium dudit élément. De même, le sel de vanadyle est généralement un nitrate, un oxalate, un acétate ou un vanadate d'ammonium. De manière préférée, lesdits sels sont des nitrates.

Les autres conditions d'imprégnation sont celles habituellement mises en oeuvre par l'homme du métier.

Préalablement à l'étape d'imprégnation, on peut ajouter au moins un additif , notamment tel que mentionné précédemment, au support. Ceci peut s'effectuer par tout procédé approprié bien connu de l'homme du métier, en particulier par imprégnation du support par une solution d'un précurseur dudit additif.

De plus, préalablement à l'étape d'imprégnation, le support, contenant éventuellement un additif, est généralement soumis à une opération de mise en forme et, éventuellement, séché et/ou calciné.

La mise en forme est effectuée selon toute technique connue de l'homme du métier. La mise en forme peut ainsi conduire à des produits de forme variée, par exemple sphérique, cylindrique, à des extrudés de forme pleine ou creuse, en particulier à profil cylindrique, polylobé, à des produits sous forme de pastilles, de billes, de boulettes, de granulés, d'anneaux, de monolithes et plus particulièrement sous forme de nid d'abeille.

Comme forme particulière avantageuse, on peut citer les extrudés pleins ou creux et les monolithes.

Le support employé dans le cadre de l'invention peut être préparé par tout procédé approprié connu. Ainsi, lorsque le support est de l'oxyde de titane, celui-ci peut notamment être obtenu à partir du procédé classique de l'attaque sulfurique de l'ilménite après hydrolyse, filtration et éventuellement séchage.

Un objet de l'invention consiste en l'utilisation du catalyseur précédemment décrit pour traiter des gaz, en particulier des effluents gazeux industriels, contenant des composés soufrés, notamment de l'hydrogène sulfuré et de l'anhydride sulfureux, en vue d'éliminer lesdits composés soufrés par mise en oeuvre de la réaction de Claus, en particulier en présence d'oxygène, qui peut être contenu dans lesdits gaz.

Un autre objet de l'invention est un procédé de traitement de gaz, par exemple des effluents gazeux industriels, contenant des composés soufrés, notamment de l'hydrogène sulfuré et de l'anhydride sulfureux, en vue d'éliminer les dits composés soufrés, en particulier par la réaction de Claus, caractérisé en ce qu'on met en oeuvre un catalyseur selon l'invention. La réaction de Claus peut être réalisée en présence d'oxygène, qui peut provenir desdits gaz.

La teneur en oxygène des gaz à traiter peut aller notamment jusqu'à 5 % en volume ; elle est par exemple comprise entre 0,5 et 4 %. en particulier entre 1,5 et 3,5 %, en volume.

Lorsque les gaz à traiter contiennent également des composés organiques du soufre, tels que $CS_2$ et/ou COS, le catalyseur selon l'invention peut être employé pour les éliminer par réaction d'hydrolyse desdits composés.

Les catalyseurs selon l'invention peuvent être analysés par spectrométrie RMN des noyaux $^{51}$V. Ainsi, dans le cas où A est le magnésium et le support formé d'oxyde de titane, le spectre obtenu diffère nettement de celui obtenu pour le pentoxyde de vanadium supporté par de l'oxyde de titane et est caractéristique du type de produit qu'est la phase supportée du catalyseur selon l'invention.

Les exemples suivants illustrent l'invention sans toutefois en limiter la portée.

Exemple 1 (selon l'invention)

1) On ajoute une solution de nitrate de calcium à une suspension d'oxyde de titane obtenue après hydrolyse et filtration d'une solution de sulfate de titanyle préparée par le procédé classique de l'attaque à l'acide sulfurique de l'ilménite ; cette suspension contient des ions sulfates en quantité telle que le rapport massique $SO_4^{2-}/TiO_2$ soit de 0,08 ; le rapport massique $Ca^{2+}/TiO_2$ est de 0,33.

La suspension est séchée à 150°C pendant 1 heure. La poudre obtenue est malaxée en présence d'eau pendant 2 heures. La pâte obtenue est extrudée au travers d'une filière pour obtenir des extrudés qui sont ensuite séchés à 110°C pendant 1 heure et calcinés à 400°C pendant 1 heure. Les extrudés ainsi préparés constituent un support, contenant 86,4 % en poids d'oxyde de titane et 13,6 % en poids de sulfate de calcium et présentant une surface spécifique BET de 120 $m^2/g$, un volume poreux total de 0,36 $cm^3/g$ et une capacité d'absorption de 0,35 ml/g.

2) 19,3 kg de ces extrudés sont imprégnés par 6,77 litres d'une solution contenant un mélange de nitrate de magnésium et de nitate de vanadyle. Cette solution d'imprégnation est préparée par dissolution de 2,06 kg de nitrate de magnésium ($Mg(NO_3)_2.6H_2O$) dans 3,90 litres d'une solution à 25 % de nitrate de vanadyle ($VO(NO_3)_3$), puis addition d'eau jusqu'à l'obtention d'un volume de 6,77 litres.

Après l'imprégnation, les extrudés sont soumis à une opération de séchage, à température ambiante pendant 24 heures, puis de calcination, à 350°C pendant 4 heures.

Le catalyseur obtenu présente une surface spécifique de 90 m$^2$/g et un volume poreux total de 0,33 cm$^3$/g. Sa teneur en phase active supportée est de 3,4 % en poids, ladite phase étant formée d'une solution solide de composition moyenne Mg$_4$V$_2$O$_9$.

Exemple 2 (selon l'invention)

On procède selon le mode opératoire de l'exemple 1, mais de manière à obtenir un catalyseur ayant une teneur en phase active supportée de 2,0 % en poids, ladite phase ayant la même composition que celle du catalyseur de l'exemple 1.

Exemple 3 (selon l'invention)

On procède selon le mode opératoire de l'exemple 1, mais de manière à obtenir un catalyseur ayant une teneur en phase active supportée de 15,0 % en poids, ladite phase ayant la même composition que celle du catalyseur de l'exemple 1.

Exemple 4 (selon l'invention)

19 kg d'extrudés obtenus à l'issue de la phase 1) de l'exemple 1 sont imprégnés par 6,67 litres d'une solution contenant un mélange de nitrate de magnésium et de nitrate de vanadyle. Cette solution d'imprégnation est préparée par dissolution de 2,62 kg de nitrate de magnésium (Mg(NO$_3$)$_2$.6H$_2$O) dans 6.30 litres d'une solution à 25 % de nitrate de vanadyle (VO(NO$_3$)$_3$), puis addition d'eau jusqu'à l'obtention d'un volume de 6,67 litres.

Après l'imprégnation, les extrudés sont soumis à une opération de séchage, à température ambiante pendant 24 heures, puis de calcination, à 350°C pendant 4 heures.

Le catalyseur obtenu présente une surface spécifique de 65 m$^2$/g et un volume poreux total de 0,31 cm$^3$/g. Sa teneur en phase active supportée est de 5,0 % en poids, ladite phase étant formée d'une solution solide de composition moyenne Mg$_{3,5}$V$_{2,2}$O$_9$.

Exemple 5 (selon l'invention)

19 kg d'extrudés obtenus à l'issue de la phase 1) de l'exemple 1 sont imprégnés par 6,67 litres d'une solution contenant un mélange de nitrate de magnésium et de nitate de vanadyle. Cette solution d'imprégnation est préparée par dissolution de 3,34 kg de nitrate de magnésium (Mg(NO$_3$)$_2$.6H$_2$O) dans 5,07 litres d'une solution à 25 % de nitrate de vanadyle (VO(NO$_3$)$_3$), puis addition d'eau jusqu'à l'obtention d'un volume de 6,67 litres.

Après l'imprégnation, les extrudés sont soumis à une opération de séchage, à température ambiante pendant 24 heures, puis de calcination, à 350°C pendant 4 heures.

Le catalyseur obtenu présente une surface spécifique de 80 m$^2$/g et un volume poreux total de 0,32 cm$^3$/g. Sa teneur en phase active supportée est de 5,0 % en poids, ladite phase étant formée d'une solution solide de composition moyenne Mg$_{4,5}$V$_{1,8}$O$_9$.

Exemples 6 à 14 (selon l'invention)

On prépare des catalyseurs selon l'invention à partir de supports connus ayant différentes compositions, ces supports contenant chacun une certaine proportion d'oxyde de titane.

Ces catalyseurs comportent une phase supportée formée d'une solution solide de composition moyenne Mg$_4$V$_2$O$_9$ : pour cela, on opère selon la phase 2) du mode opératoire de l'exemple 1, mais de manière à obtenir un catalyseur ayant une teneur en phase supportée de 5,0 ou 5,1 % en poids.

La composition de chacun de ces catalyseurs est donnée dans le tableau 1.

Exemple 15 (comparatif)

On prépare un catalyseur de l'art antérieur.

Ce catalyseur contient de l'oxyde de titane appliqué sur de la silice ; ses teneurs en oxyde de titane et en silice sont respectivement de 15 et 85 % en poids. Ce catalyseur peut être préparé selon l'enseignement du brevet britannique GB 2143225

Exemple 16 (comparatif)

On prépare un autre catalyseur de l'art antérieur.

Ce catalyseur comporte du sulfate de calcium et de l'oxyde de titane ; ses teneurs en sulfate de calcium et en oxyde de titane sont respectivement de 13 et 87 % en poids. Ce catalyseur peut être préparé selon l'enseignement du brevet US-A-4485189.

Exemple 17 Test catalytique

Les catalyseurs des exemples 1 à 16 sont testés en réaction de Claus, dans un réacteur à lit fixe, à une température de 220°C.

On introduit dans ce réacteur un mélange gazeux ayant la composition suivante en volume :

$H_2S$ : 3 %

$SO_2$ : 1,6 %

$H_2O$ : 30 %

$N_2$ : 65,4 %

Le temps de contact du mélange gazeux est de 0,08 seconde.

Le taux de conversion de l'hydrogène sulfuré a été mesuré durant les six premières heures de fonctionnement.

Puis, on ajoute dans le mélange réactionnel initial différentes quantités d'oxygène (1 et 3 % en volume par rapport au volume du mélange réactionnel initial) et on mesure le taux de conversion de l'hydrogène sulfuré.

L'analyse des compositions du mélange gazeux initial et du mélange à la sortie du réacteur est réalisée par chromatographie en phase gazeuse (par exemple à l'aide des chromatographes LXM-3MD et Gazochrom 2101).

Les résultats sont donnés dans les tableaux 1 et 2.

On constate que les catalyseurs selon l'invention, tout en ayant une activité très satisfaisante pour la réaction de Claus, présentent une activité très supérieure à celle des catalyseurs de l'art antérieur pour la réaction de Claus en présence d'oxygène.

Exemple 18 : (selon l'invention)

5 kg d'extrudés obtenus à l'issue de la phase 1) de l'exemple 1 sont imprégnés par 1,55 litres d'une solution contenant un mélange de nitrate de zinc et de nitrate de vanadyle. Cette solution d'imprégnation est préparée par dissolution de 0,567 kg de nitrate de zinc ($Zn(NO_3)_2.6H_2O$) dans 0,904 litre d'une solution de nitrate de vanadyle ($VO(NO_3)_3$) ayant une concentration en vanadium de 68 g par litre.

Après l'imprégnation, les extrudés sont soumis à une opération de séchage à température ambiante pendant 24 heures, puis de calcination à 450°C pendant 4 heures.

La teneur en phase active supportée du catalyseur obtenu est de 5,0 % en poids, ladite phase étant formée d'une solution solide de composition moyenne $Zn_{3,5}V_{2,2}O_9$.

Exemple 19 (selon l'invention)

On procède selon le mode opératoire de l'exemple 4 , mais en utilisant du nitrate de calcium ($Ca(NO_3)_2.6H_2O$) à la place du nitrate de magnésium, de manière à obtenir un catalyseur ayant une teneur en phase active supportée de 5,0 % en poids, ladite phase étant formée d'une solution solide de composition moyenne $Ca_{3,5}V_{2,2}O_9$.

Exemple 20 (selon l'invention)

On procède selon le mode opératoire de l'exemple 4, mais en utilisant comme support des extrudés d'oxyde de zirconium à la place des extrudés obtenus à l'issue de la phase 1) de l'exemple 1.

La teneur en phase active supportée est de 5,0 % en poids, ladite phase étant formée d'une solution solide de composition moyenne $Mg_{3,5}V_{2,2}O_9$.

Exemple 21 (selon l'invention)

On procède selon le mode opératoire de l'exemple 4, mais en utilisant comme support des extrudés formés uniquement d'oxyde de titane.

La teneur en phase active supportée au catalyseur obtenu est de 5,0 % en poids, ladite phase étant formée d'une solution solide de composition moyenne $Mg_{3,5}V_{2,2}O_9$.

<u>Exemple 22</u> Test catalytique

Les catalyseurs des exemples 4, 16, 18 à 21 sont testés en réaction de Claus, dans un réacteur à lit fixe à une température de 220°C.

On introduit dans ce réacteur un mélange gazeux ayant la composition suivante en volume :

$H_2S$ : 2 %
$SO_2$ : 1 %
$H_2O$ : 30 %
$N_2$ : 67 %

Le temps de contact du mélange gazeux est de 0,5 seconde.

Le taux de conversion de l'hydrogène sulfuré a été mesuré durant les six premières heures de fonctionnement.

Puis, on ajoute dans le mélange réactionnel initial différentes quantités d'oxygène (0,3 et 1 % en volume par rapport au volume du mélange réactionnel initial) et on mesure le taux de conversion de l'hydrogène sulfuré.

L'analyse des compositions du mélange gazeux initial et du mélange à la sortie du réacteur est réalisée par chromatographie en phase gazeuse (par exemple à l'aide des chromatographes LXM-3MD et Gazochrom 2101).

Les résultats sont donnés dans les tableaux 3 et 4.

On constate, comme dans l'exemple 17, que les catalyseurs selon l'invention, tout en ayant une activité très satisfaisante pour la réaction de Claus, présentent une activité très supérieure à celle des catalyseurs de l'art antérieur pour la réaction de Claus en présence d'oxygène.

## TABLEAU 1

| Ex. | Catalyseur | | Support | | Taux de conversion (%) de $H_2S$ | | |
|---|---|---|---|---|---|---|---|
| | Phase supportée | | | | % de $O_2$ en volume | | |
| | Composition moyenne | Teneur (%pds) | Teneur en $TiO_2$ (%pds) | Additif Teneur(%pds) | 0 | 1,0 | 3,0 |
| 1 | $Mg_4V_2O_9$ | 3,4 | 86,4 | $CaSO_4$ 13,6 | 73 | 70 | 60 |
| 2 | $Mg_4V_2O_9$ | 2,0 | 86,4 | $CaSO_4$ 13,6 | 73 | 71 | 60 |
| 3 | $Mg_4V_2O_9$ | 15,0 | 86,4 | $CaSO_4$ 13,6 | 76 | 78 | 78 |
| 4 | $Mg_{3,5}V_{2,2}O_9$ | 5,0 | 86,4 | $CaSO_4$ 13,6 | 76 | 78 | 78 |
| 5 | $Mg_{4,5}V_{1,8}O_9$ | 5,0 | 86,4 | $CaSO_4$ 13,6 | 76 | 80 | 80 |
| 6 | $Mg_4V_2O_9$ | 5,0 | 10 | $Al_2O_3$ 90 | 73 | 70 | 65 |
| 7 | $Mg_4V_2O_9$ | 5,0 | 90 | AlOOH 10 | 77 | 75 | 75 |
| 8 | $Mg_4V_2O_9$ | 5,1 | 99,5 | $SiO_2$ 0,5 | 77 | 75 | 75 |
| 9 | $Mg_4V_2O_9$ | 5,1 | 90 | bétonite 10 | 76 | 76 | 75 |

8

| 10 | $Mg_4V_2O_9$ | 5,1 | 80 | $Al_2(SO_4)_3$ 20 | 75 | 75 | 74 |
|----|--------------|-----|----|-------------------|----|----|----|
| 11 | $Mg_4V_2O_9$ | 5,1 | 80 | $Al_2O_3.6SiO_2$ 20 | 74 | 70 | 65 |
| 12 | $Mg_4V_2O_9$ | 5,1 | 80 | $6Al_2O_3.SiO_2$ 20 | 75 | 70 | 69 |
| 13 | $Mg_4V_2O_9$ | 5,1 | 80 | $BaSO_4$ 20 | 75 | 71 | 65 |
| 14 | $Mg_4V_2O_9$ | 5,1 | 15 | $SiO_2$ 83 | 74 | 75 | 75 |

**TABLEAU 2**

| Exemple | Catalyseur | | Taux de conversion (%) de $H_2S$ | | |
|---------|------------|--|----------------------------------|--|--|
| | Composants Teneur (%pds) | | % de $O_2$ en volume | | |
| | | | 0 | 1,0 | 3,0 |
| 15 | $TiO_2$ 15 | $SiO_2$ 85 | 73 | 60 | 39 |
| 16 | $TiO_2$ 87 | $CaSO_4$ 13 | 73 | 62 | 40 |

9

## TABLEAU 3

| Ex. | Catalyseur | | | | Taux de conversion (%) de $H_2S$ | | |
|---|---|---|---|---|---|---|---|
| | Phase supportée | | Support | | % de $O_2$ en volume | | |
| | Composition moyenne | Teneur (%pds) | Teneur en $TiO_2$(%pds) | Additif Teneur(%pds) | 0 | 0,3 | 1,0 |
| 4 | $Mg_{3,5}V_{2,2}O_9$ | 5,0 | 86,4 | $CaSO_4$ 13,6 | 71 | 74 | 90 |
| 18 | $Zn_{3,5}V_{2,2}O_9$ | 5,0 | 86,4 | $CaSO_4$ 13,6 | 69 | 74 | 90 |
| 19 | $Ca_{3,5}V_{2,2}O_9$ | 5,0 | 86,4 | $CaSO_4$ 13,6 | 68 | 73 | 80 |
| 20 | $Mg_{3,5}V_{2,2}O_9$ | 5,0 | 0 $ZrO_2 = 100$ | 0 | 65 | 70 | 80 |
| 21 | $Mg_{3,5}V_{2,2}O_9$ | 5,0 | 100 | 0 | 71 | 75 | 88 |

## TABLEAU 4

| Exemple | Catalyseur | | Taux de conversion (%) de $H_2S$ | | |
|---|---|---|---|---|---|
| | Composants Teneur (%pds) | | % de $O_2$ en volume | | |
| | | | 0 | 0,3 | 1,0 |
| 16 | $TiO_2$ 87 | $CaSO_4$ 13 | 68 | 63 | 58 |

**Revendications**

1. Catalyseur caractérisé en ce qu'il comprend un support et une phase supportée formée d'une solution solide de composition moyenne :

$$A_{4\pm y} V_{2\pm x} O_9$$

dans laquelle :

. $O \leq x \leq 0,2$ et $0 \leq y \leq 0,5$, x et y étant tels que l'électroneutralité de $A_{4\pm y} V_{2\pm x} O_9$ est assurée ; et

. A est un élément métallique permettant de stabiliser le vanadium dans sa valence 5.

2. Catalyseur selon la revendication 1 caractérisé en ce que A est un élément métallique choisi dans le groupe formé par le calcium, le magnésium et le zinc.

3. Catalyseur selon la revendication 2 caractérisé en ce que ladite phase supportée est une solution solide de composition moyenne $A_4V_2O_9$.

4. Catalyseur selon la revendication 1 caractérisé en ce que A est le magnésium.

5. Catalyseur selon la revendication 4 caractérisé en ce que ladite phase supportée est une solution solide de composition moyenne $Mg_4V_2O_9$.

6. Catalyseur selon l'une des revendications 1 à 5 caractérisé en ce que la quantité de phase supportée est comprise entre 2 et 15 % en poids par rapport au catalyseur et la quantité de support est comprise entre 85 et 98 % en poids par rapport au catalyseur.

7. Catalyseur selon l'une des revendications 1 à 6 caractérisé en ce que ledit support est à base d'au moins un oxyde choisi dans le groupe formé par l'oxyde d'aluminium, l'oxyde de titane, l'oxyde de zirconium, l'oxyde de cérium, la silice.

8. Catalyseur selon la revendication 7 caractérisé en ce que ledit support comprend en outre au moins un additif.

9. Catalyseur selon la revendication 7 caractérisé en ce que ledit support comprend 10 à 100 % en poids dudit oxyde et 0 à 90 % en poids d'au moins un additif choisi dans le groupe formé par l'oxyde d'aluminium, l'hydroxyde d'aluminium, le sulfate d'aluminium, la silice, les alumino-silicates, les argiles et les sulfates de métaux alcalino-terreux.

10. Catalyseur selon la revendication 7 caractérisé en ce que ledit support est à base d'oxyde de titane.

11. Catalyseur selon la revendication 10 caractérisé en ce que ledit support comprend 10 à 100 % d'oxyde de titane et 0 à 90 % d'au moins un additif choisi dans le groupe formé par l'oxyde d'aluminium, l'hydroxyde d'aluminium, le sulfate d'aluminium, la silice, les alumino-silicates,les argiles et les sulfates de métaux alcalino-terreux.

12. Catalyseur selon la revendication 11 caractérisé en ce que ledit additif est l'oxyde d'aluminium.

13. Catalyseur selon la revendication 12 caractérisé en ce que ledit support comprend 70 à 90 % en poids d'oxyde de titane et 10 à 30 % en poids d'oxyde d'aluminium.

14. Catalyseur selon la revendication 11 caractérisé en ce que le dit additif est un sulfate de métal alcalino-terreux.

15. Catalyseur selon la revendication 14 caractérisé en ce que ledit support comprend 80 à 99 % en poids d'oxyde de titane et 1 à 20 % en poids de sulfate de métal alcalino-terreux.

16. Catalyseur selon la revendication 14 caractérisé en ce que ledit support comprend 80 à 90 % en poids d'oxyde de titane et 10 à 20 % en poids de sulfate de métal alcalino-terreux.

17. Catalyseur selon l'une des revendications 14 à 16 caractérisé en ce que ledit sulfate est le sulfate de calcium.

18. Catalyseur selon l'une des revendications 1 à 17 caractérisé en ce que ledit support présente une surface spécifique BET comprise entre 5 et 300 $m^2/g$.

19. Catalyseur selon l'une des revendications 1 à 18 caractérisé en ce que ledit support présente un volume poreux total compris entre 0,15 et 0,80 $cm^3/g$.

20. Catalyseur selon l'une des revendications 1 à 19 pour le traitement de gaz contenant des composés soufrés.

21. Procédé de préparation d'un catalyseur selon l'une des revendications 1 à 20 caractérisé en ce qu'il consiste essentiellement à imprégner le support par une solution d'un sel de l'élément métallique A et d'un sel de vanadyle.

22. Procédé de préparation d'un catalyseur selon l'une des revendications 1 à 20 caractérisé en ce qu'il comprend les étapes suivantes :

   1) on imprègne le support par une solution d'un sel soluble de l'élément métallique A et d'un sel soluble de vanadyle,
   2) on sèche le support imprégné,
   3) éventuellement, on calcine le support séché.

23. Procédé de préparation selon la revendication 22 caractérisé en ce que l'ensemble des étapes 1), 2) et éventuellement 3) est répété plusieurs fois.

24. Procédé de préparation selon l'une des revendications 21 à 23 caractérisé en ce que, préalablement à l'étape d'imprégnation, on ajoute au moins un additif au support.

25. Procédé de préparation selon l'une des revendications 21 à 24 caractérisé en ce que, préalablement à l'étape d'imprégnation, le support contenant éventuellement un additif est soumis à une étape de mise en forme.

26. Procédé selon la revendication 25 caractérisé en ce que l'étape de mise en forme consiste à extruder le support contenant éventuellement un additif.

27. Procédé selon l'une des revendication 21 à 26 caractérisé en ce que ladite solution est soit un mélange d'une solution d'un sel de l'élément métallique A et d'une solution d'un sel de vanadyle, soit une solution d'un desdits sels dans laquelle a été introduit l'autre desdits sels.

28. Procédé selon l'une des revendications 21 à 26 caractérisé en ce que ledit sel de l'élément métallique A est un nitrate, un oxalate, un acétate ou un ammonium de l'élément métallique A.

29. Procédé selon l'une des revendication 21 à 28 caractérisé en ce que ledit sel de vanadyle est un nitrate, un oxalate, un acétate ou un vanadate d'ammonium.

30. Procédé selon l'une des revnedications 21 à 29 caractérisé en ce que ledit sel de l'élément métallique A et ledit sel de vanadyle sont des nitrates.

31. Procédé selon l'une des revendication 22 à 30 caractérisé en ce que l'étape de sèchage est effectuée à une température comprise entre 15 et 150°C, pendant 0,5 à 30 heures.

32. Procédé selon l'une des revendications 22 à 31 caractérisé en ce que l'étape de calcination est effectuée à une température comprise entre 250 et 600°C, pendant 1 à 8 heures.

33. Utilisation d'un catalyseur selon l'une des revendications 1 à 20 pour traiter des gaz contenant des composés soufrés, notamment de l'hydrogène sulfuré et de l'anhydride sulfureux, en vue d'éliminer lesdits composés soufrés par mise en oeuvre de la réaction de Claus.

34. Utilisation d'un cataliseur selon l'une des revendications 1 à 20 pour traiter des gaz contenant des composés soufrés, notamment de l'hydrogène sulfuré et de l'anhydride sulfureux, en vue d'éliminer lesdits composés soufrés par mise en oeuvre de la réaction de Claus, en présence d'oxygène.

35. Utilisation selon la revendication 34 caractérisée en ce que l'oxygène provient desdits gaz.

36. Procédé de traitement de gaz contenant des composés soufrés en vue d'éliminer lesdits composés soufrés caractérisé en ce qu'on utilise un catalyseur selon l'une des revendications 1 à 20.

**37.** Procédé de traitement de gaz contenant des composés soufrés, notamment de l'hydrogène sulfuré et de l'anhydride sulfureux, en vue d'éliminer lesdits composés soufrés par mise en oeuvre de la réaction de Claus, caractérisé en ce qu'on utilise un catalyseur selon l'une des revendications 1 à 20.

**38.** Procédé selon la revendication 37 caractérisé en ce que la réaction de Claus est mise en oeuvre en présence d'oxygène.

**39.** Procédé selon la revendication 38 caractérisé en ce que l'oxygène provient desdits gaz.

**Claims**

**1.** Catalyst characterized in that it includes a support and a supported phase made up of a solid solution of average composition:

$$A_{4\pm y}V_{2\pm x}O_9$$

in which:
O $\leq$ x $\leq$ 0.2 and 0 $\leq$ y $\leq$ 0.5, x and y being such that the electroneutrality of $A_{4\pm y}V_{2\pm x}O_9$ is ensured; and
A is a metallic element allowing the vanadium to be stabilized in its valency 5.

**2.** Catalyst according to Claim 1, characterized in that A is a metallic element chosen from the group made up of calcium, magnesium and zinc.

**3.** Catalyst according to Claim 2, characterized in that the said supported phase is a solid solution of average composition $A_4V_2O_9$.

**4.** Catalyst according to Claim 1, characterized in that A is magnesium.

**5.** Catalyst according to Claim 4, characterized in that the said supported phase is a solid solution of average composition $Mg_4V_2O_9$.

**6.** Catalyst according to one of Claims 1 to 5, characterized in that the quantity of supported phase is between 2 and 15 % by weight relative to the catalyst and the quantity of support is between 85 and 98 % by weight relative to the catalyst.

**7.** Catalyst according to one of Claims 1 to 6, characterized in that the said support is based on at least one oxide chosen from the group made up of aluminium oxide, titanium oxide, zirconium oxide, cerium oxide and silica.

**8.** Catalyst according to Claim 7, characterized in that the said support additionally includes at least one additive.

**9.** Catalyst according to Claim 7, characterized in that the said support includes 10 to 100 % by weight of the said oxide and 0 to 90 % by weight of at least one additive chosen from the group made up of aluminium oxide, aluminium hydroxide, aluminium sulphate, silica, aluminosilicates, clays and alkaline-earth metal sulphates.

**10.** Catalyst according to Claim 7, characterized in that the said support is based on titanium oxide.

**11.** Catalyst according to Claim 10, characterized in that the said support includes 10 to 100 % of titanium oxide and 0 to 90 % of at least one additive chosen from the group made up of aluminium oxide, aluminium hydroxide, aluminium sulphate, silica, aluminosilicates, clays and alkaline-earth metal sulphates.

**12.** Catalyst according to Claim 11, characterized in that the said additive is aluminium oxide.

**13.** Catalyst according to Claim 12, characterized in that the said support includes 70 to 90 % by weight of titanium oxide and 10 to 30 % by weight of aluminium oxide.

**14.** Catalyst according to Claim 11, characterized in that the said additive is an alkaline-earth metal sulphate.

**15.** Catalyst according to Claim 14, characterized in that the said support includes 80 to 99 % by weight of titanium oxide and 1 to 20 % by weight of alkaline-earth metal sulphate.

**16.** Catalyst according to Claim 14, characterized in that the said support includes 80 to 90 % by weight of titanium oxide and 10 to 20 % by weight of alkaline-earth metal sulphate.

**17.** Catalyst according to one of Claims 14 to 16, characterized in that the said sulphate is calcium sulphate.

**18.** Catalyst according to one of Claims 1 to 17, characterized in that the said support has a BET specific surface of between 5 and 300 $m^2$/g.

**19.** Catalyst according to one of Claims 1 to 18, characterized in that the said support has a total pore volume of between 0.15 and 0.80 $cm^3$/g.

**20.** Catalyst according to one of Claims 1 to 19 for the treatment of gas containing sulphur compounds.

**21.** Process for the preparation of a catalyst according to one of Claims 1 to 20, characterized in that it consists essentially in impregnating the support with a solution of a salt of the metallic element A and of a vanadyl salt.

**22.** Process for the preparation of a catalyst according to one of Claims 1 to 20, characterized in that it includes the following stages:

1) the support is impregnated with a solution of a soluble salt of the metallic element A and of a soluble vanadyl salt,
2) the impregnated support is dried,
3) the dried support is optionally calcined.

**23.** Process of preparation according to Claim 22, characterized in that the whole of the stages 1), 2) and optionally 3) is repeated several times.

**24.** Process of preparation according to one of Claims 21 to 23, characterized in that, before the impregnation stage, at least one additive is added to the support.

**25.** Process of preparation according to one of Claims 21 to 24, characterized in that, before the impregnation stage, the support optionally containing an additive is subjected to a forming stage.

**26.** Process according to Claim 25, characterized in that the forming stage consists in extruding the support optionally containing an additive.

**27.** Process according to one of Claims 21 to 26, characterized in that the said solution is either a mixture of a solution of a salt of the metallic element A and of a solution of a vanadyl salt, or a solution of one of the said salts into which the other of the said salts has been introduced.

**28.** Process according to one of Claims 21 to 26, characterized in that the said salt of the metallic element A is a nitrate, an oxalate, an acetate or an ammonium of the metallic element A.

**29.** Process according to one of Claims 21 to 28, characterized in that the said vanadyl salt is a nitrate, an oxalate, an acetate or an ammonium vanadate.

**30.** Process according to one of Claims 21 to 29, characterized in that the said salt of the metallic element A and the said vanadyl salt are nitrates.

**31.** Process according to one of Claims 22 to 30, characterized in that the drying stage is performed at a temperature of between 15 and 150°C for 0.5 to 30 hours.

**32.** Process according to one of Claims 22 to 31, characterized in that the calcination stage is performed at a temperature of between 250 and 600°C for 1 to 8 hours.

**33.** Use of a catalyst according to one of Claims 1 to 20 for treating gases containing sulphur compounds, especially hydrogen sulphide and sulphur dioxide, with a view to removing the said sulphur compounds by making use of the Claus reaction.

**34.** Use of a catalyst according to one of Claims 1 to 20 for treating gases containing sulphur compounds, especially hydrogen sulphide and sulphur dioxide, with a view to removing the said sulphur compounds by making use of the Claus reaction in the presence of oxygen.

**35.** Use according to Claim 34, characterized in that the oxygen originates from the said gases.

**36.** Process for the treatment of gas containing sulphur compounds with a view to removing the said sulphur compounds, characterized in that a catalyst according to one of Claims 1 to 20 is employed.

**37.** Process for the treatment of gas containing sulphur compounds, especially hydrogen sulphide and sulphur dioxide, with a view to removing the said sulphur compounds by making use of the Claus reaction, characterized in that a catalyst according to one of Claims 1 to 20 is employed.

**38.** Process according to Claim 37, characterized in that the Claus reaction is used in the presence of oxygen.

**39.** Process according to Claim 38, characterized in that the oxygen originates from the said gases.

**Patentansprüche**

**1.** Katalysator, dadurch gekennzeichnet, daß er einen Träger und eine auf dem Träger aufgebrachte Phase enthält, die aus einer festen Lösung der mittleren Zusammensetzung

$$A_{4\pm y}V_{2\pm x}O_9$$

gebildet ist, wobei

- $O \leq x \leq 0,2$ und $0 \leq y \leq 0,5$ ist und x und y solche Werte annehmen, daß die Elektroneutralität von $A_{4\pm y}V_{2\pm x}O_9$ gewahrt bleibt; und
- A ein Metallelement ist, das die Stabilisierung des Vanadiums in der Wertigkeit 5 ermöglicht.

**2.** Katalysator nach Anspruch 1, dadurch gekennzeichnet, daß A ein Metallelement ist, das ausgewählt ist aus der Gruppe von Calcium, Magnesium und Zink.

**3.** Katalysator nach Anspruch 2, dadurch gekennzeichnet, daß die auf dem Träger aufgebrachte Phase eine feste Lösung der mittleren Zusammensetzung $A_4V_2O_9$ ist.

**4.** Katalysator nach Anspruch 1, dadurch gekennzeichnet, daß A Magnesium ist.

**5.** Katalysator nach Anspruch 4, dadurch gekennzeichnet, daß die auf dem Träger aufgebrachte Phase eine feste Lösung der mittleren Zusammensetzung $Mg_4V_2O_9$ ist.

**6.** Katalysator nach einem der Ansprüche 1 bis 5, dadurch gekennzeichnet, daß die Menge der auf dem Träger aufgebrachten Phase zwischen 2 und 15 Gew.-%, bezogen auf den Katalysator, und die Menge an Träger zwischen 85 und 98 Gew.-%, bezogen auf den Katalysator, beträgt.

**7.** Katalysator nach einem der Ansprüche 1 bis 6, dadurch gekennzeichnet, daß der Träger auf Basis von mindestens einem Oxid vorliegt, das ausgewählt ist aus der Gruppe von Aluminiumoxid, Titanoxid, Zirkonoxid, Ceroxid und Siliciumdioxid.

**8.** Katalysator nach Anspruch 7, dadurch gekennzeichnet, daß der Träger zusätzlich mindestens ein Additiv enthält.

**9.** Katalysator nach Anspruch 7, dadurch gekennzeichnet, daß der Träger 10 bis 100 Gew.-% des Oxids und 0 bis 90 Gew.-% mindestens eines Additivs enthält, das ausgewählt ist aus der Gruppe von Aluminiumoxid, Aluminiumhydroxid, Aluminiumsulfat, Siliciumdioxid, Aluminosilicaten, Tonen und Erdalkalimetallsulfaten.

**10.** Katalysator nach Anspruch 7, dadurch gekennzeichnet, daß der Träger auf Basis von Titanoxid vorliegt.

11. Katalysator nach Anspruch 10, dadurch gekennzeichnet, daß der Träger 10 bis 100 % Titanoxid und 0 bis 90 % wenigstens eines Additivs enthält, das ausgewählt ist aus der Gruppe von Aluminiumoxid, Aluminiumhydroxid, Aluminiumsulfat, Siliciumdioxid, Aluminosilicaten, Tonen und Erdalkalimetallsulfaten.

12. Katalysator nach Anspruch 11, dadurch gekennzeichnet, daß das Additiv Aluminiumoxid ist.

13. Katalysator nach Anspruch 12, dadurch gekennzeichnet, daß der Träger 70 bis 90 Gew.-% Titanoxid und 10 bis 30 Gew.-% Aluminiumoxid enthält.

14. Katalysator nach Anspruch 11, dadurch gekennzeichnet, daß das Additiv ein Erdalkalimetallsulfat ist.

15. Katalysator nach Anspruch 14, dadurch gekennzeichnet, daß der Träger 80 bis 99 Gew.-% Titanoxid und 1 bis 20 Gew.-% eines Erdalkalimetallsulfats enthält.

16. Katalysator nach Anspruch 14, dadurch gekennzeichnet, daß der Träger 80 bis 90 Gew.-% Titanoxid und 10 bis 20 Gew.-% eines Erdalkalimetallsulfats enthält.

17. Katalysator nach einem der Ansprüche 14 bis 16, dadurch gekennzeichnet, daß das Sulfat Calciumsulfat ist.

18. Katalysator nach einem der Ansprüche 1 bis 17, dadurch gekennzeichnet, daß der Träger eine spezifische BET-Oberfläche zwischen 5 und 300 m²/g aufweist.

19. Katalysator nach einem der Ansprüche 1 bis 18, dadurch gekennzeichnet, daß der Träger ein Gesamtporenvolumen zwischen 0,15 und 0,80 cm³/g aufweist.

20. Katalysator nach einem der Ansprüche 1 bis 19 zur Behandlung von Gasen, die schwefelhaltige Verbindungen enthalten.

21. Verfahren zur Herstellung eines Katalysators nach einem der Ansprüche 1 bis 20, dadurch gekennzeichnet, daß es im wesentlichen darin besteht, den Träger mit der Lösung eines Salzes eines Metallelements A und eines Vanadylsalzes zu imprägnieren.

22. Verfahren zur Herstellung eines Katalysators nach einem der Ansprüche 1 bis 20, dadurch gekennzeichnet, daß es folgende Schritte umfaßt:

   (1) Man imprägniert den Träger mit der Lösung eines löslichen Salzes des Metallelements A und eines löslichen Vanadylsalzes.
   (2) Man trocknet den imprägnierten Träger.
   (3) Man calciniert den getrockneten Träger gegebenenfalls.

23. Verfahren zur Herstellung nach Anspruch 22, dadurch gekennzeichnet, daß alle Schritte (1), (2) und gegebenenfalls (3) mehrfach wiederholt werden.

24. Verfahren zur Herstellung nach einem der Ansprüche 21 bis 23, dadurch gekennzeichnet, daß man vor dem Imprägnierungsschritt mindestens ein Additiv auf dem Träger aufbringt.

25. Verfahren zur Herstellung nach einem der Ansprüche 21 bis 24, dadurch gekennzeichnet, daß man vor dem Imprägnierungsschritt den gegebenenfalls ein Additiv enthaltenden Träger einem Formgebungsschritt unterzieht.

26. Verfahren nach Anspruch 25, dadurch gekennzeichnet, daß der Formgebungsschritt darin besteht, den gegebenenfalls ein Additiv enthaltenden Träger zu extrudieren.

27. Verfahren nach einem der Ansprüche 21 bis 26, dadurch gekennzeichnet, daß die Lösung entweder eine Mischung aus der Lösung eines Salzes eines Metallelements A und einer Vanadylsalzlösung oder die Lösung eines dieser Salze ist, in die das andere dieser Salze eingebracht ist.

28. Verfahren nach einem der Ansprüche 21 bis 26, dadurch gekennzeichnet, daß das Salz des Metallelements A ein Nitrat, Oxalat, Acetat oder ein Ammoniumsalz des Metallelements A ist.

**29.** Verfahren nach einem der Ansprüche 21 bis 28, dadurch gekennzeichnet, daß das Vanadylsalz ein Nitrat, Oxalat, Acetat oder ein Ammoniumvanadat ist.

**30.** Verfahren nach einem der Ansprüche 21 bis 29, dadurch gekennzeichnet, daß das Salz des Metallelements A und das Vanadylsalz Nitrate sind.

**31.** Verfahren nach einem der Ansprüche 22 bis 30, dadurch gekennzeichnet, daß der Trocknungsschritt bei einer Temperatur zwischen 15 und 150 °C während 0,5 bis 30 Stunden durchgeführt wird.

**32.** Verfahren nach einem der Ansprüche 22 bis 31, dadurch gekennzeichnet, daß der Calcinierungsschritt bei einer Temperatur zwischen 250 und 600 °C während 1 bis 8 Stunden durchgeführt wird.

**33.** Verwendung eines Katalysators nach einem der Ansprüche 1 bis 20 zur Behandlung von Gasen, die schwefelhaltige Verbindungen enthalten, insbesondere Schwefelwasserstoff und Schwefeldioxid, um diese schwefelhaltigen Verbindungen entsprechend der Claus-Reaktion zu entfernen.

**34.** Verwendung eines Katalysators nach einem der Ansprüche 1 bis 20 zur Behandlung von Gasen, die schwefelhaltige Verbindungen enthalten, insbesondere Schwefelwasserstoff und Schwefeldioxid, um diese schwefelhaltigen Verbindungen in Gegenwart von Sauerstoff entsprechend der Claus-Reaktion zu entfernen.

**35.** Verwendung nach Anspruch 34, dadurch gekennzeichnet, daß der Sauerstoff aus diesen Gasen stammt.

**36.** Verfahren zur Behandlung von Gasen, die schwefelhaltige Verbindungen enthalten, um diese schwefelhaltigen Verbindungen zu entfernen, dadurch gekennzeichnet, daß man einen Katalysator nach einem der Ansprüche 1 bis 20 verwendet.

**37.** Verfahren zur Behandlung von Gasen, die schwefelhaltige Verbindungen enthalten, insbesondere Schwefelwasserstoff und Schwefeldioxid, um diese schwefelhaltigen Verbindungen entsprechend der Claus-Reaktion zu entfernen, dadurch gekennzeichnet, daß man einen Katalysator nach einem der Ansprüche 1 bis 20 verwendet.

**38.** Verfahren nach Anspruch 37, dadurch gekennzeichnet, daß die Claus-Reaktion in Gegenwart von Sauerstoff durchgeführt wird.

**39.** Verfahren nach Anspruch 38, dadurch gekennzeichnet, daß der Sauerstoff aus diesen Gasen stammt.